# EUROPÄISCHE PATENTSCHRIFT

(11) **EP 1 541 893 B1**
(45) Veröffentlichungstag und Bekanntmachung des Hinweises auf die Patenterteilung: **12.03.2008**
(21) Anmeldenummer: 04027159.5
(22) Anmeldetag: 16.11.2004
(51) Int. Cl.: F16F 15/18

(54) **Dämpfungsvorrichtung**
Damping device
Dispositif amortisseur

(30) Priorität: 12.12.2003 DE 10358113
(43) Veröffentlichungstag der Anmeldung: 15.06.2005
(73) Patentinhaber: LuK Lamellen und Kupplungsbau Beteiligungs KG, 77815 Bühl (DE)
(72) Erfinder: Hill, Wolfgang, 76135 Karlsruhe (DE)

(56) Entgegenhaltungen:
- EP-A- 0 526 903
- US-A- 5 248 133
- US-A- 5 521 448
- PATENT ABSTRACTS OF JAPAN Bd. 1998, Nr. 12, 31. Oktober 1998 (1998-10-31) & JP 10 196731 A (YASKAWA ELECTRIC CORP), 31. Juli 1998 (1998-07-31)
- PATENT ABSTRACTS OF JAPAN Bd. 011, Nr. 281 (M-624), 11. September 1987 (1987-09-11) & JP 62 080318 A (HITACHI LTD), 13. April 1987 (1987-04-13)

## Beschreibung

Die Erfindung betrifft eine Dämpfungsvorrichtung zur Dämpfung von Drehzahlunförmigkeiten einer rotierenden Welle, mit einem Läufer, der mindestens ein aus einem nicht ferromagnetischen elektrischen Leiterwerkstoff bestehendes Läuferteil aufweist, und mit einem Erreger zum bereichsweisen Durchsetzen des Läuferteils mit einem magnetischen Fluss, wobei der Läufer mit dem mindestens einen Läuferteil quer zur Flussrichtung des magnetischen Flusses relativ zu dem Erreger bewegbar gelagert ist.

Eine derartige Dämpfungsvorrichtung mit einem als Scheibenrotor ausgebildeten Läufer mit einem ringscheibenförmigen Läuferteil aus Aluminium ist aus der Praxis bekannt. Das Läuferteil ist auf einer rotierenden Welle angeordnet, die bei bestimmten Betriebszuständen Drehzahlschwankungen aufweist, die durch Störschwingungen verursacht sind. Beim Auftreten derartiger Drehzahlschwankungen wird mit Hilfe der Ansteuereinrichtung in eine Wicklung des Erregers ein Gleichstrom eingespeist, der in einem weichmagnetischen Kern des Erregers einen magnetischen Fluss induziert, der einen zwischen Zähnen des weichmagnetischen Kerns angeordneten, von der Rotationsachse der Welle radial beabstandeten Teilbereich des Läuferteils durchsetzt. Dabei ist die Rotationsrichtung des Läuferteils quer zu dem das Läuferteil durchsetzenden magnetischen Fluss orientiert, so dass in dem von dem magnetischen Fluss durchsetzten Teilbereich des Läuferteils elektrisch Ströme induziert werden, die in dem Läuferteil Wärmeverluste erzeugen, welche die Störschwingungen dämpfen. Ein Nachteil der Dämpfungsvorrichtung besteht jedoch noch darin, dass die Dämpfungsvorrichtung noch ziemlich große Abmessungen aufweist und dass das Dämpfungsmoment nur relativ gering ist. Die Dämpfungsvorrichtung ist deshalb zur Dämpfung von an der Antriebswelle eines PKW-Verbrennungsmotors auftretenden Störschwingungen praktisch nicht geeignet.

JP 10196731 offenbart eine Dämpfungsvorrichtung gemäß dem Oberbegriff des Anspruchs 1.

Es besteht deshalb die Aufgabe, eine Dämpfungsvorrichtung der eingangs genannten Art zu schaffen, die bei kompakten Abmessungen ein hohes Dämpfungsmoment ermöglicht.

Die Lösung dieser Aufgabe besteht darin, dass das Läuferteil zumindest in einem in Gebrauchsstellung von dem magnetischen Fluss durchsetzten Bereich mindestens eine Öffnung aufweist, in der ein ferromagnetischer Flussleitkörper angeordnet ist.

In vorteilhafter Weise wird durch den wenigstens einen Flussleitkörper der magnetische Widerstand zwischen den Zähnen des weichmagnetischen Körpers gegenüber der aus dem Stand der Technik bekannten Dämpfungsvorrichtung, bei der das Leiterteil ausschließlich aus einem elektrisch gut leitenden, nichtferromagnetischen Werkstoff besteht, erheblich reduziert. In dem aus dem weichmagnetischen Kern, mindestens einen zwischen diesem und dem Läufer befindlichen Luftspalt, dem wenigstens einen Flussleitkörper und dem Läuferteil gebildeten Magnetkreis kann dadurch bei gleichen Abmessungen der Dämpfungsvorrichtung ein wesentlich größerer magnetischer Fluss erzeugt werden, so dass in dem Läuferteil auch eine entsprechend hohe elektrische Spannung induziert wird. Da diese Spannung über den Leiterwerkstoff, der im Vergleich zu dem Werkstoff des wenigstens einen ferromagnetischen Flussleitkörpers eine wesentlich größere elektrische Leitfähigkeit aufweisen kann, praktisch kurzgeschlossen wird, ermöglicht die Dämpfungsvorrichtung ein entsprechend hohes Dämpfungsmoment. In vorteilhafter Weise ist es dadurch möglich, die Dämpfungsvorrichtung beispielsweise in eine Kupplungsglocke eines Schaltgetriebes einzubauen, um an der Antriebswelle des PKW-Verbrennungsmotors auftretende Störschwingungen aktiv zu dämpfen. Dabei kann die Stromstärke, mit der die Wicklung des Erregers bestromt wird, in Abhängigkeit vom Betriebszustand des Verbrennungsmotors mittels einer Ansteuereinrichtung eingestellt werden. Als Zustandsgrößen für den Betriebszustand können beispielsweise die Amplitude der Störschwingungen, die Drehzahl der Antriebswelle und/oder das Drehmoment des Verbrennungsmotors ermittelt werden.

Der Läufer der Dämpfungsvorrichtung ist ähnlich aufgebaut wie der Läufer einer Induktionsmaschine, wobei allerdings der Läufer kein Joch aufweist.

Vorteilhaft ist, wenn das Läuferteil mehrere in Umfangsrichtung voneinander beabstandete Öffnungen aufweist, in denen jeweils ein ferromagnetischer Flussleitkörper angeordnet ist. Mit der Dämpfungsvorrichtung kann dann ein noch größeres Dämpfungsmoment erzeugt werden.

Bei einer zweckmäßigen Ausgestaltung der Erfindung weist der Erreger einen weichmagnetischen Kern auf, der wenigstens zwei durch ein Joch miteinander verbundene Zähne hat, die über mindestens einen Luftspalt mit dem Läuferteil zusammenwirken, wobei an dem Kern mindestens eine Wicklung zur Induktion eines magnetischen Flusses in dem Kern angeordnet ist, wobei das Läuferteil mindestens einen ringscheibenförmigen, mit mindestens einer Flachseite den Zähnen zugewandten Bereich aufweist, und wobei die Öffnungen in dem ringscheibenförmigen Bereich angeordnet sind. Die Wirbelströme werden dann an von der Rotationsachse des Läufers beabstandeten Stelle in dem Läuferteil induziert, so dass sich ein entsprechend hohes Dämpfungsmoment ergibt. Der relativ teuere Leiterwerkstoff ist bevorzugt nur in dem ringscheibenförmigen Bereich angeordnet, was einen kostengünstigen Aufbau der Dämpfungsvorrichtung ermöglicht. Als Leiterwerkstoff wird bevorzugt Kupfer und/oder Aluminium verwendet.

Vorteilhaft ist, wenn die Zähne in Axialrichtung des Läuferteils beidseits des Läuferteils angeordnet sind, und wenn die Öffnungen als Wandungsdurchbrüche ausgebildet sind. Dadurch ergibt sich einerseits ein besonders kleiner magnetischer Widerstand in dem Magnetkreis und andererseits können des Läuferteil und die Flussleitkörper kostengünstig als Stanz- oder Biegstanzteile hergestellt werden.

Bei einer zweckmäßigen Ausführungsform der Erfindung ragen die ferromagnetischen Flussleitkörper vorzugsweise beidseits des Läuferteils aus den Öffnungen heraus, wobei zweckmäßigerweise mindestens zwei der Flussleitkörper durch Zähne eines weichmagnetischen Elements gebildet sind, das vorzugsweise ringförmig oder ringabschnittförmig ausgebildet ist. Der Läufer ist dann kostengünstig aus einigen wenigen Einzelteilen herstellbar, die sich leicht montieren lassen.

Vorteilhaft ist, wenn die Öffnungen vom radial inneren und/oder äußeren Rand des ringscheibenförmigen Bereichs beabstandet sind. Die von dem magnetischen Fluss in dem rotierenden Läufer induzierten Ströme können dann in der Erstreckungsebene des scheibenförmigen Läufers um die einzelnen Flussleitkörper herum fließen, was hohe Kreisströme und somit eine hohe Dämpfung ermöglicht.

Die Öffnungen weisen bevorzugt eine längliche Querschnittsform auf, die mit ihrer Längsachse quer zur Umfangsrichtung des Läuferteils und vorzugsweise etwa radial zu dessen Rotationsachse angeordnet ist. Dadurch ist es möglich, in Umfangsrichtung des Läuferteils eine Vielzahl von Flussleitkörpern nebeneinander anzuordnen, wodurch ein gleichmäßiges Dämpfungsmoment ermöglicht wird. Die Zähne des weichmagnetischen Kerns erstrecken sich jeweils vorzugsweise über mehre Flussleitkörper gleichzeitig. Die Zähne sind an ihren dem Läuferteil zugewandten Enden derart geformt, dass der Fluss ohne wesentliche Querschnittsverengungen im weichmagnetischen Körper mit hoher Konzentration in den Luftspalt eintritt.

Bei einer bevorzugten Ausführungsform der Erfindung ist der radial innere und/oder äußere Randbereich des Läuferteils gegenüber der Erstreckungsebene des ringscheibenförmigen Bereichs vorzugsweise kragenförmig abgewinkelt oder abgekröpft. Der das Dämpfungsdrehmoment bewirkende Bereich des Läuferteils kann dann relativ weit außen angeordnet sein, was eine höhere Leistungsdichte ermöglicht. Weiterhin wird das Verhältnis von Dämpfungsmoment zum Trägheitsmoment verbessert, indem der Leiterwerkstoff auf einem kleinen Radius angeordnet ist. Dennoch ergibt sich in dem Leiterwerkstoff eine weitgehend gleichmäßige Stromdichte.

Besonders vorteilhaft ist, wenn der Läufer mindestens zwei der ringscheibenförmigen Bereiche aufweist, die in Richtung des Magnetflusses im Luftspalt voneinander beabstandet in vorzugsweise parallel zueinander verlaufenden Flächen angeordnet und miteinander verbunden sind, wenn der weichmagnetische Kern mindestens drei Zähne hat, und wenn vorzugsweise zumindest einer der Zähne zum Durchfluten beider ringscheibenförmigen Bereiche mit dem magnetischen Fluss in einen zwischen den ringscheibenförmigen Bereichen gebildeten Zwischenraum eingreift. Die Dämpfungsvorrichtung ermöglicht dann ein noch größeres Dämpfungsmoment. Da der in dem Zwischenraum zwischen den ringscheibenförmigen Bereichen angeordnete Zahn des weichmagnetischen Kerns für die magnetische Durchflutung beider ringscheibenförmigen Bereiche genutzt werden kann, weist die Dämpfungsvorrichtung besonders kompakte Abmessungen auf. Die Windungslänge der das Magnetfeld erzeugenden Spule sind klein und damit entstehen im Stator wenig unerwünschte Verluste.

Bei einer besonders vorteilhaften Ausführungsform der Erfindung hat der weichmagnetische Kern mindestens einen Klauenpolkörper, der mehrere in Umfangsrichtung des Läuferteils voneinander beabstandete Zähne aufweist. Auch durch diese Maßnahme kann ein sehr hohes Dämpfungsmoment erzielt werden. In Umfangsrechtung des Läufers wechseln vorzugsweise Zähne unterschiedlicher magnetischer Polarität einander ab, so dass die einzelnen Bereiche des Läuferteils bei einer Relativbewegung zwischen dem Läuferteil und dem Erreger abwechselnd in zueinander entgegen gesetzte Richtungen magnetisiert werden. Die Flußänderung in den Flussleitstücken erfolgt mit doppeltem Betrag und hoher Frequenz und induziert im Läufer erhebliche Kreisströme, wobei die Läuferverluste proportional zur Bremskraft sind.

Vorzugsweise sind wenigstens zwei der Erreger in Umfangsrichtung des Läuferteils versetzt zueinander angeordnet. Auch bei dieser Ausführungsform sind die Zähne bevorzugt derart angeordnet, dass sich in Umfangsrichtung des Läuferteils magnetische Nord- und Südpole einander abwechseln.

Je nach vorhandenem Bauraum kann die Wicklung auf dem Joch und/oder mindestens einem Zahn angeordnet sein.

Nachfolgend sind Ausführungsbeispiele der Erfindung anhand der Zeichnung näher erläutert. Es zeigen:
- Fig. 1: einen Teilquerschnitt durch eine einen Läufer, einen Erreger mit einem weichmagnetischen U-Kern und eine Wicklung aufweisenden Dämpfungsvorrichtung, wobei die Wicklung auf einem Jochbereich des weichmagnetischen Kerns angeordnet ist,
- Fig. 2: eine Darstellung ähnlich Fig. 1, wobei jedoch die Wicklung auf einem Zahn des weichmagnetischen Kerns angeordnet ist,
- Fig. 3: einen Teilquerschnitt durch eine Dämpfungsvorrichtung, die einen E-förmigen weichmagnetischen Kern hat, wobei die Wicklung auf dem mittleren Zahn des Kerns angeordnet ist,
- Fig. 4: einen Teillängsschnitt durch eine Dämpfungsvorrichtung,
- Fig. 5: einen Teilquerschnitt entlang einer Radialebene der in Fig. 4 gezeigten Dämpfungsvorrichtung,
- Fig. 6: einen Teillängsschnitt durch eine Dämpfungsvorrichtung mit zwei in Umfangsrichtung des Läufers voneinander beabstandeten Erregern,
- Fig. 7: einen Teilquerschnitt durch eine Radialebene der in Fig. 6 gezeigten Dämpfungsvorrichtung, und
- Fig. 8: einen Längsschnitt durch eine Dämpfungsvorrichtung, deren weichmagnetischer Kern Klauenpolkörper aufweist.

Eine im Ganzen mit 1 bezeichnete Dämpfungsvorrichtung zur Dämpfung von Drehzahlunförmigkeiten einer um eine Rotationsachse 2 rotierenden Welle weist einen mit der Welle in Antriebsverbindung stehenden Läufer 3 und mindestens einen stationären Erreger 4 auf. Der Erreger 4 hat einen weichmagnetischen Kern 5 und eine daran angeordnete, mit einem Harz verfestigte Wicklung 6. Zur Induktion eines magnetischen Flusses im Kern 5 ist die Wicklung 6 mit einer Ansteuereinrichtung 7 verbunden, mit der ein Gleichstrom in die Wicklung 6 einspeisbar ist.

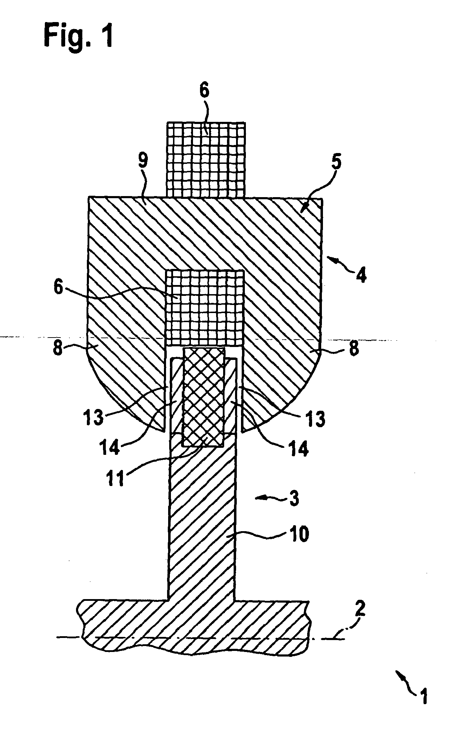

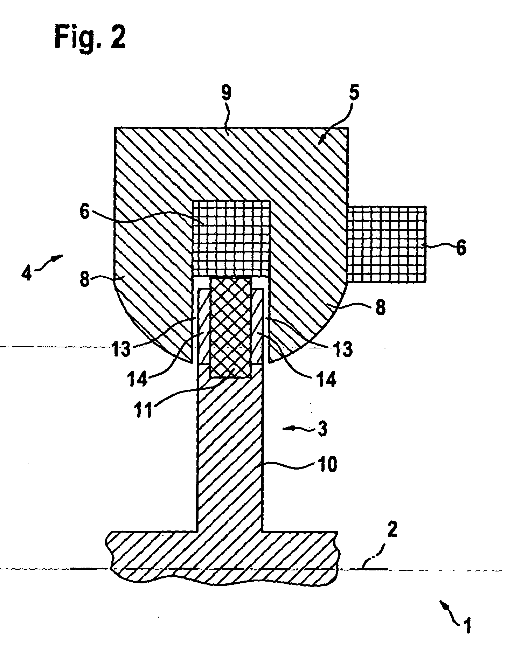

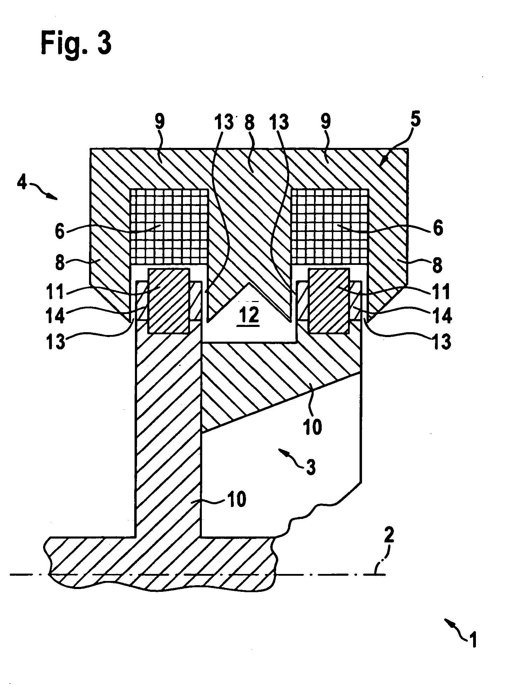

Bei den in Fig. 1 und 2 gezeigten Ausführungsbeispielen weist der weichmagnetische Kern 5 zwei Zähne 8 auf, die durch ein Joch 9 etwa U-förmig miteinander verbunden sind. Bei dem Ausführungsbeispiel nach Fig. 1 ist das Joch 9 und bei dem Ausführungsbeispiel nach Fig. 2 einer der Zähne 8 mit der Wicklung 6 bewickelt. Bei dem in Fig. 3 gezeigten Ausführungsbeispiel hat der weichmagnetische Kern 5 drei Zähne 8, die durch das Joch 9 etwa E-förmig miteinander verbunden sind. Bei diesem Ausführungsbeispiel ist der mittlere Zahn 8 mit der Wicklung 6 bewickelt.

Bei den Ausführungsbeispielen nach Fig. 1 und 2 ist der Läufer 3 jeweils etwa kreisscheibenförmig mit einem mit der Welle verbundenen Trägerteil 10 und einem daran konzentrisch zu der Rotationsachse 2 angeordneten ringscheibenförmigen Läuferteil 11 ausgebildet. Das Trägerteil 10 besteht bevorzugt aus einem unmagnetischen Metall und/oder Kunststoff und das Läuferteil 11 aus einem nicht ferromagnetischen, elektrischen Leiterwerkstoff, beispielsweise aus Kupfer und/oder Aluminium. Bei den Ausführungsbeispielen nach Fig. 3 bis 7 sind an dem Trägerteil 10 jeweils zwei ringförmige, konzentrisch zur Rotationsachse 2 verlaufende Läuferteile 11 angeordnet, die jeweils einen ringscheibenförmigen Bereich aufweisen. Die ringscheibenförmigen Bereiche der Läuferteile 11 verlaufen parallel zueinander sowie konzentrisch zur Rotationsachse 2 und sind durch einen Zwischenraum 12 axial voneinander beabstandet.

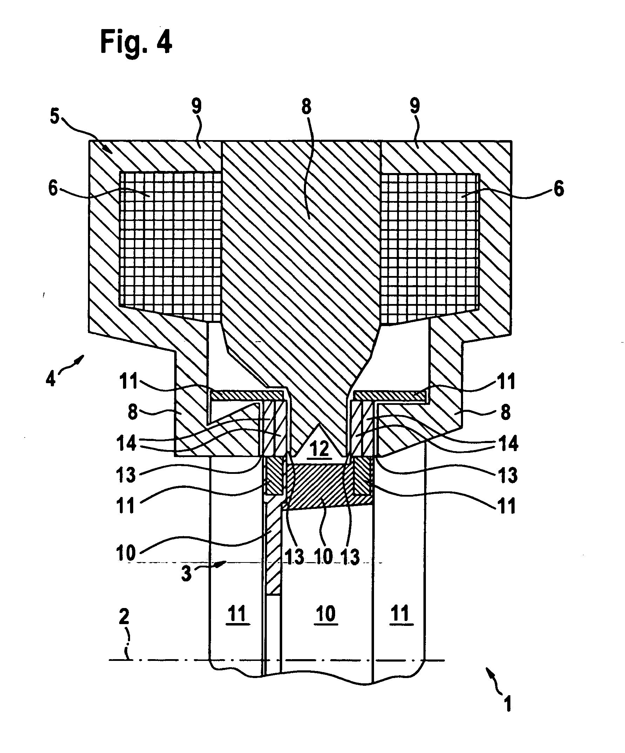

In Fig. 1 bis 4 und 6 ist erkennbar, dass die Läuferteile 11 jeweils zwischen die Zähne 8 eingreifen und dass zwischen den Läuferteilen 11 und den ihnen jeweils zugewandten Zähnen 8 jeweils ein schmaler Luftspalt 13 gebildet ist. In Fig. 4 bis 7 ist erkennbar, dass die Zähne 8 an ihren den Läuferteilen 11 zugewandten Enden jeweils axial schmäler und tangential breiter werden. Wenn die Wicklung 6 von einem elektrischen Strom durchflossen ist, bilden die beidseits der Läuferteile 11 angeordneten Zahnenden Magnetpole unterschiedlicher Polarität. In Gebrauchsstellung sind die ringscheibenförmigen Bereiche der Läuferteile 11 zwischen den Enden der Zähne 8 angeordnet. Bei den in Fig. 4 bis 7 gezeigten Ausführungsbeispielen ist das Ende des mittleren Zahns 8 in dem Zwischenraum 12 zwischen den beiden Läuferteilen 11 angeordnet.

Die Zähne 8 wirken über Luftspalte 13 derart mit den Läuferteilen 11 zusammen, dass ihre ringscheibenförmigen Bereiche bereichsweise von dem magnetischen Fluss des weichmagnetischen Kerns 5 durchsetzt werden. Dabei ist der magnetische Fluss in den Luftspalten etwa parallel zur Rotationsachse 2 des Läufers 3 angeordnet. Die Läuferteile 11 bewegen sich also bei ihrer Rotationsbewegung etwa rechtwinklig zur Flussrichtung des magnetischen Flusses.

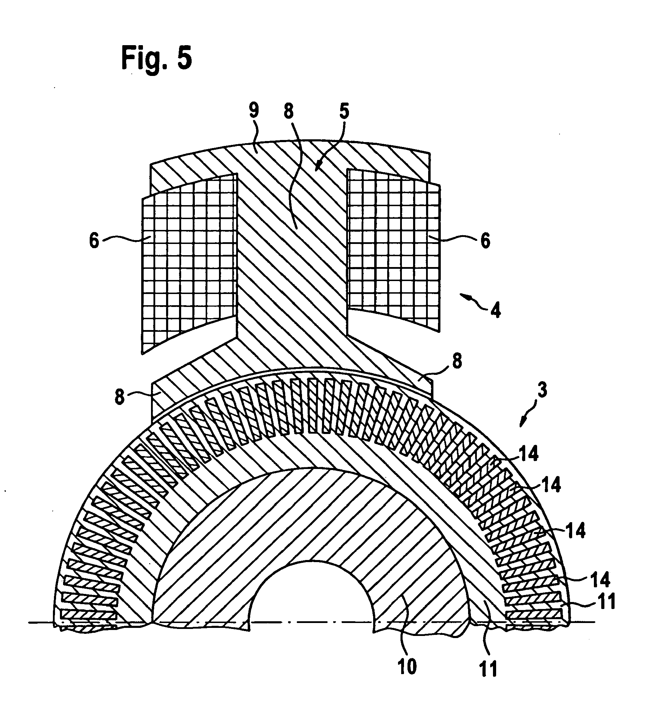

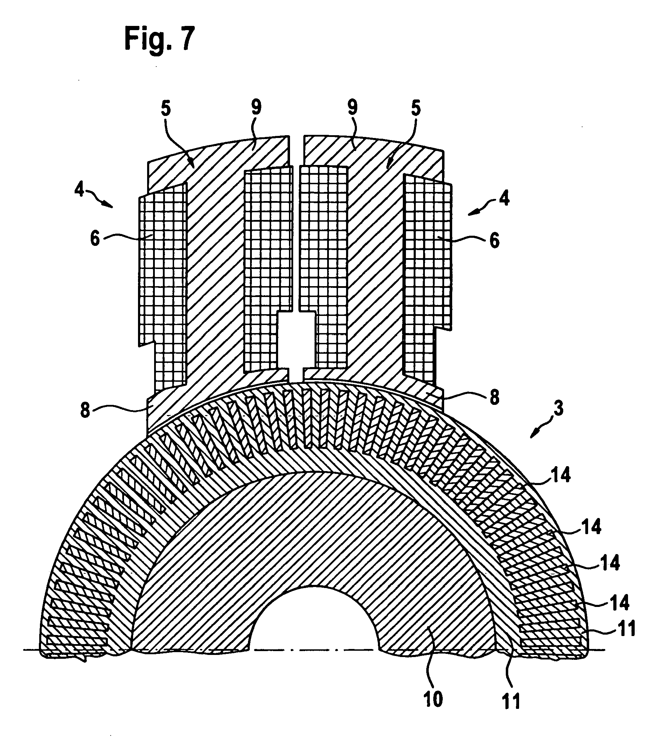

Wie in Fig. 5 und 7 besonders gut erkennbar ist, weisen die Läuferteile 11 in den ringförmigen Bereichen eine Vielzahl von in Umfangsrichtung des Läuferteils 11 hintereinander angeordneten, voneinander beabstandeten Öffnungen auf, die als Wandungsdurchbrüche ausgebildet sind. Die Wandungsdurchbrüche werden jeweils von einem ferromagnetischen Flussleitkörper 14 etwa parallel zur Flussrichtung des magnetischen Flusses in den Luftspalten 13 durchsetzt. Der Querschnitt der Flussleitkörper 14 entspricht etwa dem Querschnitt der Öffnungen. In Fig. 5 und 7 ist erkennbar, dass die Öffnungen und die Flussleitkörper 14 jeweils eine längliche, etwa rechteck- oder trapezförmige Form aufweisen und mit ihrer Längsachse etwa radial zur Rotationsachse 2 angeordnet sind.

In Fig. 4 und 5 ist erkennbar, dass die Flussleitkörper 14 aus den Öffnungen herausragen und mit ihren Enden etwas über die benachbarten flachseitigen Oberflächenebenen der Läuferteile 11 in Richtung auf die Zähne 8 überstehen. Dabei sind die Flussleitkörper 14 durch Zähne zweier ringförmiger, beidseits des Läuferteils 11 angeordneter, gezahnter weichmagnetischer Elemente gebildet. Die weichmagnetischen Elemente sind baugleich ausgebildet und derart angeordnet, dass die Zähne des einen weichmagnetischen Elements zu den Zähne des anderen weichmagnetischen Elements auf Lücke versetzt sind. Durch die Flussleitkörper 14 wird der magnetische Widerstand des Läufers 3 im Bereich des Läuferteils 11 reduziert, wodurch sich der magnetische Fluss in dem weichmagnetischen Kern und dem Läuferteil 11 entsprechen erhöht. Die Flussleitkörper 14 bestehen vorzugsweise aus Eisen oder Nickel.

Wie in Fig. 5 und 7 besonders gut erkennbar ist, sind die Öffnungen jeweils sowohl vom radial inneren als auch vom radial äußeren Rand des ringscheibenförmigen Bereichs des Läuferteils 11 beabstandet. Dadurch können die von dem magnetischen Fluss in dem Läuferteil 11 induzierten elektrischen Ströme in der Erstreckungsebene des ringscheibenförmigen Bereichs und somit auf kurzen Wegen jeweils um die Flussleitkörper 14 herum fließen.

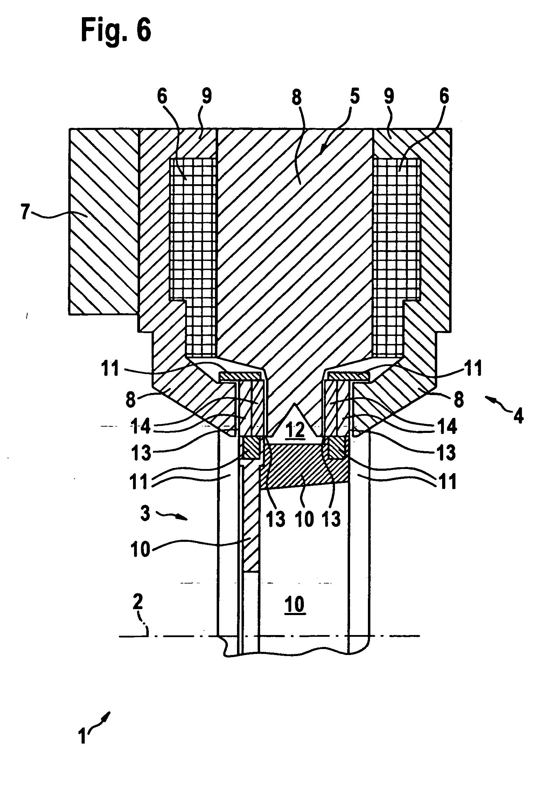

In Fig. 4 und 6 ist erkennbar, dass der radial äußere Randbereich jedes Läuferteils 11 jeweils gegenüber der Erstreckungsebene ihres ringscheibenförmigen Bereichs kragenförmig um etwa 90° zu den äußeren Zähnen 8 des weichmagnetischen Kerns 5 hin abgewinkelt ist. Dabei hintergreift der Polschuh des dem betreffenden Läuferteil 11 jeweils zugeordneten äußeren Zahns 8 den kragenförmigen Randbereich des Läuferteils 11 innenseitig. Der Durchmesser der Läuferteile 11 reduziert sich dadurch entsprechend. Dennoch wird am Außenumfang des Läuferteils 11 ein ausreichender Leiterquerschnitt für den Stromfluss bereitgestellt. Der Querschnitt des zwischen dem radial inneren Rand des Läuferteils 11 und den radial inneren Enden der Flussleitkörper 14 befindlichen Ringbereichs des Läuferteils 11 entspricht etwa dem Querschnitt des zwischen den radial äußeren Enden der Flussleitkörper 14 und dem äußeren Rand des Läuferteils 11 befindlichen Ringbereichs des Läuferteils 11.

Bei dem Ausführungsbeispiel gemäß Fig. 4 ist der mittlere Zahn 8 des weichmagnetischen Kerns 5 asymmetrisch bezüglich einer normal zur der Rotationsachse 2 verlaufenden, mittig zwischen den Erstreckungsebenen der ringscheibenförmigen Bereiche der beiden Läuferteile 11 angeordneten Mittelebene ausgebildet. Deutlich ist erkennbar, dass der auf der einen Seite dieser Mittelebene befindliche Teil des mittleren Zahns 8 in Axialrichtung des Läufers 3 eine größere Breite aufweist als der auf der anderen Seite der Mittelebene befindliche Teil des Zahns 8. Auch die beiden äußeren Zähne 8 des weichmagnetischen Kerns 5 sind asymmetrisch bezüglich dieser Mittelebene ausgebildet. Durch diese Maßnahme können die Abmessungen der Dämpfungsvorrichtung an einen vorhandenen Bauraum, der beispielsweise in einer Kupplungsglocke einer Kupplung für ein Schaltgetriebe angeordnet sein kann, angeprasst werden. Selbstverständlich kann der weichmagnetische Kern 5 aber auch symmetrisch zu der erwähnten Mittelebene ausgebildet sein, wie dies bei dem Ausführungsbeispiel in Fig. 6 gezeigt ist.

Bei dem Ausführungsbeispiel nach Fig. 6 und 7 hat die Dämpfungsvorrichtung 1 zwei Erreger 4, deren weichmagnetische Kerne 5 in Umfangsrichtung des Läufers 3 hintereinander angeordnet und durch einen Zwischenraum voneinander beabstandet sind. Die Wicklungen 6 der Erreger 4 werden mittels der Ansteuereinrichtung derart bestromt, dass in Umfangsrichtung des Läufers 3 Polschuhe unterschiedlicher magnetischer Polarität einander abwechseln. Dadurch wird beim Vorbeibewegen eines Segments des Läufers 3 an den Polschuhen eine möglichst große Veränderung des magnetischen Flusses in dem Segment und somit ein entsprechend großes Dämpfungsmoment erreicht.

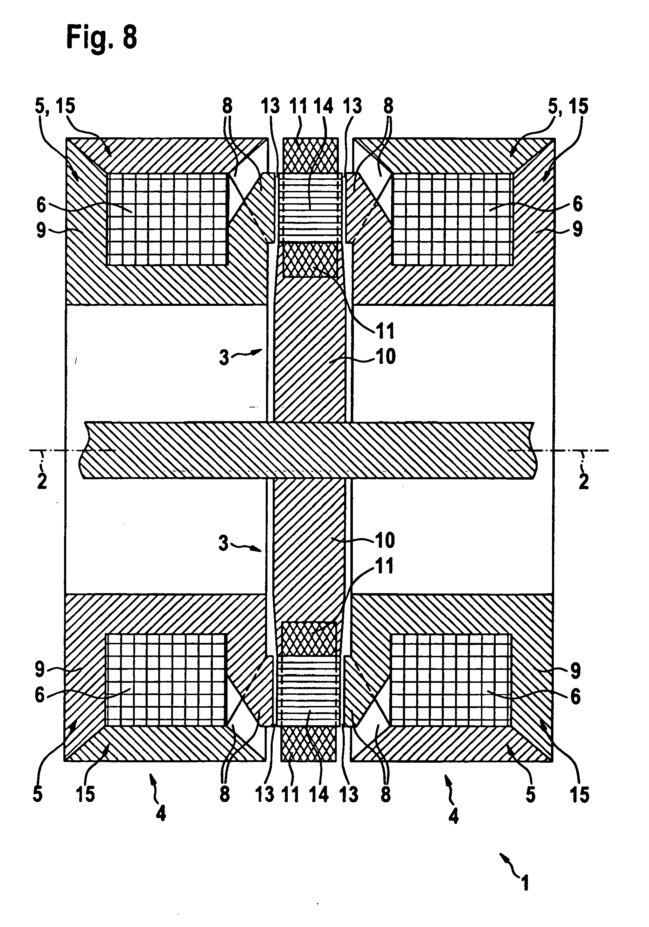

Bei dem in Fig. 8 gezeigten Ausführungsbeispiel weist der weichmagnetische Kern 5 Klauenpolkörper 15 auf, die jeweils mehrere in Umfangsrichtung des Läuferteils 11 voneinander beabstandete Zähne 8 haben. Die Klauenpolkörper 15 sind jeweils aus zwei magnetisch leitend miteinander verbundenen Biegstanzteilen zusammengesetzt, von denen das eine radial innen und das andere radial außen angeordnet ist.

Jedem Klauenpolkörper 15 ist jeweils eine Wicklung 6 zugeordnet, die in einer ringförmigen Aufnahme des betreffenden Klauenpolkörpers 15 etwa koaxial zur Rotationsachse 2 angeordnet ist. Der magnetische Fluss um die Wicklungen 6 wird jeweils durch beide die Wicklung 6 umgreifende Biegestanzteile der Klauenpolkörper 15 geleitet. In Umfangsrichtung zueinander benachbart aufeinander folgende Zähne 8 der einzelnen Klauenpolkörper 15 bilden jeweils abwechselnd magnetische Nord- und Südpole. Die beidseits des Läuferteils 11 angeordneten, jeweils aus dem Klauenpolkörper 15 und der Wicklung 6 bestehenden Baugruppen sind baugleich ausgebildet. Der Aufbau des Läufers 3 entspricht im Wesentlichen dem Aufbau der in Fig. 1 und 2 gezeigten Läufer 3.

Die Wicklungen 6 werden derart in zueinander entgegen gesetzte Richtungen bestromt, dass jeweils einem einen magnetischen Nordpol aufweisenden Zahn 8 des einen Klauenpolkörpers 15 ein einen magnetischen Südpol aufweisender Zahn 8 des anderen Klauenpolkörpers 15 axial gegenüberliegt. In den Zwischenräumen zwischen den jeweils einander zugeordneten Zähnen 8 der beiden Klauenpolkörper sind die Flussleitkörper 14 angeordnet. Zwischen den Zähnen 8 und den diesen gegenüberliegenden Flussleitkörpern 14 ist jeweils ein Luftspalt 13 gebildet.

In die Wicklungen 6 wird ein Gleichstrom eingespeist, der in Abhängigkeit von dem jeweils gewünschten Dämpfungsmoment geregelt oder gesteuert wird.

Für die Funktion des Dämpfungselements reicht es aus wenn nur auf einer Seite der Rotorscheibe ein Klauenpolkörper mit einer Erregerspule angeordnet ist, auf der gegenüberliegenden Seite ist lediglich ein Rückschlusskörper aus weichmagnetischem Material anzuordnen. Alternativ zur axialen Flussführung in den Luftspalten sind Bauformen mit radialer Flussrichtung in den Luftspalten entsprechend dem konstruktiven Lösungsansatz der Erfindung realisierbar. Weiterhin kann der Läufer auch linear bewegt werden, da die Flußänderung und damit der Dämpfungseffekt unabhängig von der Bewegungsrichtung ist.

Bei den in der Zeichnung gezeigten Ausführungsbeispielen durchsetzt der magnetische Fluss die Luftspalte 13 axial zu dem Läufer 3 durchsetzt. Es ist aber auch denkbar, dass der magnetische Fluss den Luftspalt 13 radial durchflutet.

### Bezugszeichenliste

- 1: Dämpfungsvorrichtung
- 2: Rotationsachse
- 3: Läufer
- 4: Erreger
- 5: weichmagnetischer Kern
- 6: Wicklung
- 7: Ansteuereinrichtung
- 8: Zahn
- 9: Joch
- 10: Trägerteil
- 11: Läuferteil
- 12: Zwischenraum
- 13: Luftspalt
- 14: Flussleitkörper
- 15: Klauenpolkörper

## Patentansprüche

1. Dämpfungsvorrichtung (1) zur Dämpfung von Drehzahlunförmigkeiten einer rotierenden Welle, mit einem Läufer (3), der mindestens ein aus einem nicht ferromagnetischen elektrischen Leiterwerkstoff bestehendes Läuferteil (11) aufweist, und mit einem Erreger (4) zum bereichsweisen Durchsetzen des Läuferteils (11) mit einem magnetischen Fluss, wobei der Läufer (3) mit dem mindestens einen Läuferteil (11) quer zur Flussrichtung des magnetischen Flusses relativ zu dem Erreger (4) bewegbar gelagert ist, **dadurch gekennzeichnet, dass** das Läuferteil (11) zumindest in einem in Gebrauchsstellung von dem magnetischen Fluss durchsetzten Bereich mindestens eine Öffnung aufweist, in der ein ferromagnetischer Flussleitkörper (14) angeordnet ist.

2. Dämpfungsvorrichtung (1) nach Anspruch 1, **dadurch gekennzeichnet, dass** das Läuferteil (11) mehrere in Umfangsrichtung voneinander beabstandete Öffnungen aufweist, in denen jeweils ein ferromagnetischer Flussleitkörper (14) angeordnet ist.

3. Dämpfungsvorrichtung (1) nach Anspruch 1 oder 2, **dadurch gekennzeichnet, dass** der Erreger (4) einen weichmagnetischen Kern (5) aufweist, der wenigstens zwei durch ein Joch (9) miteinander verbundene Zähne (8) hat, die über mindestens einen Luftspalt (13) mit dem Läuferteil (11) zusammenwirken, dass an dem Kern (5) mindestens eine Wicklung (6) zur Induktion eines magnetischen Flusses in dem Kern (5) angeordnet ist, dass das Läuferteil (11) mindestens einen ringscheibenförmigen, mit mindestens einer Flachseite den Zähnen (8) zugewandten Bereich aufweist, und dass die Öffnungen in dem ringscheibenförmigen Bereich angeordnet sind.

4. Dämpfungsvorrichtung (1) nach einem der Ansprüche 1 bis 3, **dadurch gekennzeichnet, dass** die Zähne (8) in Axialrichtung des Läuferteils (11) beidseits des Läuferteils (11) angeordnet sind, und dass die Öffnungen als Wandungsdurchbrüche ausgebildet sind.

5. Dämpfungsvorrichtung (1) nach einem der Ansprüche 1 bis 4, **dadurch gekennzeichnet, dass** die ferromagnetischen Flussleitkörper (14) vorzugsweise beidseits des Läuferteils (11) aus den Öffnungen herausragen.

6. Dämpfungsvorrichtung (1) nach einem der Ansprüche 1 bis 5, **dadurch gekennzeichnet, dass** mindestens zwei der Flussleitkörper (14) durch Zähne eines weichmagnetischen Elements gebildet sind, das vorzugsweise ringförmig oder ringabschnittförmig ausgebildet ist.

7. Dämpfungsvorrichtung (1) nach einem der Ansprüche 1 bis 6, **dadurch gekennzeichnet, dass** die Öffnungen vom radial inneren und/oder äußeren Rand des ringscheibenförmigen Bereichs beabstandet sind.

8. Dämpfungsvorrichtung (1) nach einem der Ansprüche 1 bis 7, **dadurch gekennzeichnet, dass** die Öffnungen eine längliche Querschnittsform aufweisen, die mit ihrer Längsachse quer zur Umfangsrichtung des Läuferteils (11) und vorzugsweise etwa radial zu dessen Rotationsachse (2) angeordnet ist.

9. Dämpfungsvorrichtung (1) nach einem der Ansprüche 1 bis 8, **dadurch gekennzeichnet, dass** der radial innere und/oder äußere Randbereich des Läuferteils (11) gegenüber der Erstreckungsebene des ringscheibenförmigen Bereichs vorzugsweise kragenförmig abgewinkelt oder abgekröpft ist.

10. Dämpfungsvorrichtung (1) nach einem der Ansprüche 1 bis 9, **dadurch gekennzeichnet, dass** der Läufer (3) mindestens zwei der ringscheibenförmigen Bereiche aufweist, die in Richtung des Magnetflusses im Luftspalt voneinander beabstandet in vorzugsweise parallel zueinander verlaufenden Flächen angeordnet und miteinander verbunden sind, dass der weichmagnetische Kern (5) mindestens drei Zähne (8) hat, und dass vorzugsweise zumindest einer der Zähne (8) zum Durchfluten beider ringscheibenförmigen Bereiche mit dem magnetischen Fluss in einen zwischen den ringscheibenförmigen Bereichen gebildeten Zwischenraum (13) eingreift.

11. Dämpfungsvorrichtung (1) nach einem der Ansprüche 1 bis 10, **dadurch gekennzeichnet, dass** der weichmagnetische Kern (5) mindestens einen Klauenpolkörper hat, der mehrere in Umfangsrichtung des Läuferteils (11) voneinander beabstandete Zähne (8) aufweist.

12. Dämpfungsvorrichtung (1) nach einem der Ansprüche 1 bis 11, **dadurch gekennzeichnet, dass** wenigstens zwei der Erreger (4) in Umfangsrichtung des Läuferteils (11) versetzt zueinander angeordnet sind.

13. Dämpfungsvorrichtung (1) nach einem der Ansprüche 1 bis 12, **dadurch gekennzeichnet, dass** die Wicklung (6) auf dem Joch (9) angeordnet ist.

14. Dämpfungsvorrichtung (1) nach einem der Ansprüche 1 bis 13, **dadurch gekennzeichnet, dass** die Wicklung (6) auf mindestens einem der Zähne (8) angeordnet ist.

15. Dämpfungsvorrichtung (1) nach einem der Ansprüche 1 bis 14, **dadurch gekennzeichnet, dass** die Zähne (8) und die ferromagnetischen Flussleitkörper (14) derart relativ zueinander angeordnet sind, dass der magnetische Fluss den mindestens einen Luftspalt (13) axial zu dem Läufer (3) durchsetzt.

16. Dämpfungsvorrichtung (1) nach einem der Ansprüche 1 bis 15, **dadurch gekennzeichnet, dass** die Zähne (8) und die ferromagnetischen Flussleitkörper (14) derart relativ zueinander angeordnet sind, dass der magnetische Fluss den mindestens einen Luftspalt (13) radial zu dem Läufer (3) durchsetzt.

## Claims

1. Damping device (1) for damping rotation speed irregularities of a rotating shaft, with a rotor (3), which has at least one rotor part (11), which is made from a non-ferromagnetic electrical conductor material, and with an exciter (4) for subjecting regions of the rotor part (11) to a magnetic flux, the rotor (3) being mounted with the at least one rotor part (11) transversely with respect to the direction of flow of the magnetic flux in such a way that it is capable of moving in relation to the exciter (4), **characterized in that** the rotor part (11), at least in a region subjected to the magnetic flux in the use position, has at least one opening, in which a ferromagnetic flux-concentrating body (14) is arranged.

2. Damping device (1) according to Claim 1, **characterized in that** the rotor part (11) has a plurality of openings, which are spaced apart from one another in the circumferential direction and in which in each case one ferromagnetic flux-concentrating body (14) is arranged.

3. Damping device (1) according to Claim 1 or 2, **characterized in that** the exciter (4) has a soft-magnetic core (5), which has at least two teeth (8), which are connected to one another by means of a yoke (9) and interact with the rotor part (11) via at least one air gap (13), **in that** at least one winding (6) for inducing a magnetic flux in the core (5) is arranged on the core (5), **in that** the rotor part (11) has at least one region in the form of an annular disc which faces the teeth (8) with at least one flat side, and **in that** the openings are arranged in the region in the form of an annular disc.

4. Damping device (1) according to one of Claims 1 to 3, **characterized in that** the teeth (8) are arranged in the axial direction of the rotor part (11) on both sides of the rotor part (11), and **in that** the openings are in the form of wall apertures.

5. Damping device (1) according to one of Claims 1 to 4, **characterized in that** the ferromagnetic flux-concentrating bodies (14) preferably protrude out of the openings on both sides of the rotor part (11).

6. Damping device (1) according to one of Claims 1 to 5, **characterized in that** at least two of the flux-concentrating bodies (14) are formed by teeth of a soft-magnetic element, which is preferably annular or in the form of a ring segment.

7. Damping device (1) according to one of Claims 1 to 6, **characterized in that** the openings are spaced apart from the radially inner and/or outer edge of the region in the form of an annular disc.

8. Damping device (1) according to one of Claims 1 to 7, **characterized in that** the openings have an elongate cross-sectional form, which is arranged with its longitudinal axis transversely with respect to the circumferential direction of the rotor part (11) and preferably approximately radially with respect to its axis of rotation (2).

9. Damping device (1) according to one of Claims 1 to 8, **characterized in that** the radially inner and/or outer edge region of the rotor part (11) is preferably bent back or bent at a right angle in the form of a collar with respect to the plane of extent of the region in the form of an annular disc.

10. Damping device (1) according to one of Claims 1 to 9, **characterized in that** the rotor (3) has at least two of the regions in the form of annular discs, which are arranged in such a way that they are spaced apart from one another in the direction of the magnetic flux in the air gap in faces, which preferably run parallel to one another, and are connected to one another, **in that** the soft-magnetic core (5) has at least three teeth (8), and **in that** preferably at least one of the teeth (8) engages in an interspace (13) formed between the regions in the form of annular discs for the purpose of permeating the two regions in the form of annular discs with the magnetic flux.

11. Damping device (1) according to one of Claims 1 to 10, **characterized in that** the soft-magnetic core (5) has at least one claw-pole body, which has a plurality of teeth (8), which are spaced apart from one another in the circumferential direction of the rotor part (11).

12. Damping device (1) according to one of Claims 1 to 11, **characterized in that** at least two of the exciters (4) are arranged offset with respect to one another in the circumferential direction of the rotor part (11).

13. Damping device (1) according to one of Claims 1 to 12, **characterized in that** the winding (6) is arranged on the yoke (9).

14. Damping device (1) according to one of Claims 1 to 13, **characterized in that** the winding (6) is arranged on at least one of the teeth (8).

15. Damping device (1) according to one of Claims 1 to 14, **characterized in that** the teeth (8) and the ferromagnetic flux-concentrating bodies (14) are arranged in relation to one another in such a way that the magnetic flux passes through the at least one air gap (13) axially with respect to the rotor (3).

16. Damping device (1) according to one of Claims 1 to 15, **characterized in that** the teeth (8) and the ferromagnetic flux-concentrating bodies (14) are arranged in relation to one another in such a way that the magnetic flux passes through the at least one air gap (13) radially with respect to the rotor (3).

## Revendications

1. Dispositif d'amortissement (1) pour amortir les difformités de la vitesse de rotation d'un arbre en rotation, comprenant un rotor (3) qui présente au moins un élément de rotor (11), composé d'un matériau électriquement conducteur non ferromagnétique, et comprenant un excitateur (4) pour exposer certaines zones de l'élément de rotor (11) à un flux magnétique, le rotor (3) comportant l'au moins un élément de rotor (11) étant monté de manière à pouvoir se déplacer transversalement au sens du flux magnétique par rapport à l'excitateur (4), **caractérisé en ce que** l'élément de rotor (11) présente au moins une ouverture dans au moins une zone exposée au flux magnétique en position d'utilisation, dans laquelle est disposé un corps conducteur de flux ferromagnétique (14).

2. Dispositif d'amortissement (1) selon la revendication 1, **caractérisé en ce que** l'élément de rotor (11) présente plusieurs ouvertures espacées les unes des autres dans le sens du pourtour, dans lesquelles est à chaque fois disposé un corps conducteur de flux ferromagnétique (14).

3. Dispositif d'amortissement (1) selon la revendication 1 ou 2, **caractérisé en ce que** l'excitateur (4) présente un noyau (5) magnétique doux qui comprend au moins deux dents (8) reliées ensemble par une culasse (9) et qui interagissent avec l'élément de rotor (11) par le biais d'au moins un entrefer (13), qu'au moins un enroulement (6) est monté sur le noyau (5) pour induire un flux magnétique dans le noyau (5), que l'élément de rotor (11) présente au moins une zone en forme de disque annulaire et qui fait face aux dents (8) avec au moins un côté plat et que les ouvertures sont disposées dans la zone en forme de disque annulaire.

4. Dispositif d'amortissement (1) selon l'une des revendications 1 à 3, **caractérisé en ce que** les dents (8) sont disposées dans le sens axial de l'élément de rotor (11) des deux côtés de l'élément de rotor (11) et que les ouvertures sont réalisées sous la forme de traversées de paroi.

5. Dispositif d'amortissement (1) selon l'une des revendications 1 à 4, **caractérisé en ce que** les corps conducteurs de flux ferromagnétiques (14) font de préférence saillie par les ouvertures des deux côtés de l'élément de rotor (11).

6. Dispositif d'amortissement (1) selon l'une des revendications 1 à 5, **caractérisé en ce qu'**au moins deux des corps conducteurs de flux (14) sont formés par les dents d'un élément magnétique doux qui est de préférence réalisé en forme d'anneau ou de section d'anneau.

7. Dispositif d'amortissement (1) selon l'une des revendications 1 à 6, **caractérisé en ce que** les ouvertures sont espacées du bord radial intérieur et/ou extérieur de la zone en forme de disque annulaire.

8. Dispositif d'amortissement (1) selon l'une des revendications 1 à 7, **caractérisé en ce que** les ouvertures présentent une section transversale de forme oblongue dont l'axe longitudinal est disposé transversalement par rapport au sens du pourtour de l'élément de rotor (11) et de préférence à peu près radialement par rapport à son axe de rotation (2).

9. Dispositif d'amortissement (1) selon l'une des revendications 1 à 8, **caractérisé en ce que** la zone de bord radiale intérieure et/ou extérieure de l'élément de rotor (11) est de préférence cintrée en forme de collet ou coudée par rapport au plan de développement de la zone en forme de disque annulaire.

10. Dispositif d'amortissement (1) selon l'une des revendications 1 à 9, **caractérisé en ce que** le rotor (3) présente au moins deux des zones en forme de disque annulaire, lesquelles sont disposées espacées l'une de l'autre en direction du flux magnétique dans l'entrefer dans des surfaces qui s'étendent de préférence parallèlement l'une à l'autre et sont reliées ensemble, que le noyau magnétique doux (5) comporte au moins trois dents (8) et que de préférence au moins l'une des dents (8) pénètre dans un espace intermédiaire (13) formé entre les zones en forme de disque annulaire en vue de faire traverser les deux zones en forme de disque annulaire par le flux magnétique.

11. Dispositif d'amortissement (1) selon l'une des revendications 1 à 10, **caractérisé en ce que** le noyau magnétique doux (5) comporte au moins un corps à pôle à griffes qui présente plusieurs dents (8) espacées les unes des autres dans le sens du pourtour de l'élément de rotor (11).

12. Dispositif d'amortissement (1) selon l'une des revendications 1 à 11, **caractérisé en ce qu'**au moins deux des excitateurs (4) sont disposés décalés l'un de l'autre dans le sens du pourtour de l'élément de rotor (11).

13. Dispositif d'amortissement (1) selon l'une des revendications 1 à 12, **caractérisé en ce que** l'enroulement (6) est disposé sur la culasse (9).

14. Dispositif d'amortissement (1) selon l'une des revendications 1 à 13, **caractérisé en ce que** l'enroulement (6) est disposé sur au moins l'une des dents (8).

15. Dispositif d'amortissement (1) selon l'une des revendications 1 à 14, **caractérisé en ce que** les dents (8) et le corps conducteur de flux ferromagnétique (14) sont disposés l'un par rapport à l'autre de telle sorte que le flux magnétique traverse l'au moins un entrefer (13) dans le sens axial par rapport au rotor (3).

16. Dispositif d'amortissement (1) selon l'une des revendications 1 à 15, **caractérisé en ce que** les dents (8) et le corps conducteur de flux ferromagnétique (14) sont disposés l'un par rapport à l'autre de telle sorte que le flux magnétique traverse l'au moins un entrefer (13) dans le sens radial par rapport au rotor (3).
